# EUROPEAN PATENT APPLICATION

(11) **EP 2 146 129 A2**
(43) Date of publication of application: **20.01.2010**
(21) Application number: 09163415.4
(22) Date of filing: 22.06.2009
(51) Int. Cl.: F16L 55/165

(54) **Pipe lining material and method for manufacturing same**

(30) Priority: 18.07.2008 JP 2008187475; 24.12.2008 JP 2008326759
(71) Applicant: Shonan Gosei-Jushi Seisakusho K.K., Kanagawa 254-0807 (JP)
(72) Inventor: Kamiyama, Takao, Kanagawa-ken Kanagawa 254-0807 (JP); Kaneta, Koji, Kanagawa-ken Kanagawa 254-0807 (JP); Fujii, Kenji, Kanagawa-ken Kanagawa 254-0807 (JP); Ogura, Kazuaki, Kanagawa-ken Kanagawa 254-0807 (JP)
(74) Representative: Kronthaler, Wolfgang N.K.

(57) **Abstract**

A pipe lining material (1) comprising an inner lining material (11) and an outer lining material (10) is used to rehabilitate an aged existing pipe (22). The inner lining material (11) and the outer lining material (10) are made of a tubular resin-absorbent material that is impregnated with a photo-curing resin and a thermosetting resin. The resin-absorbent material (11a) of the inner lining material (11) has a higher density than that of the outer lining material (10). The photo-curing resin of the inner and outer lining materials (11, 10) is cured by light when the pipe lining material (1) is irradiated with light, and the heat generated when the photo-curing resin is cured cures the thermosetting resin of the inner and outer lining materials (11,10). Since the resin-absorbent material (11a) of the inner lining material (11) has a high density, voids are less readily formed. Even if voids are generated in the resin-absorbent material (10a) of the outer lining material (10), the voids will be covered by the inner lining material (11) having fewer voids. This ensures that the pipe lining material (1) will have better water-tightness.

## Description

The present invention relates to a pipe lining material comprising a flexible, tubular resin-absorbent material impregnated with a curable liquid resin, and to a method for manufacturing the pipe lining material.

Pipe lining methods for lining and repairing sewer pipes or other conduits without having to dig the conduit out of the ground have been used in cases where the conduit has deteriorated. In such pipe-lining methods, a pipe lining material is everted or pulled into a conduit using fluid pressure. The pipe lining material comprises a tubular resin-absorbent material having an exterior surface covered by a plastic film, the material being impregnated with an uncured curable liquid resin. The pipe lining material is held pressed against the inner wall of the conduit, and the curable resin impregnated in the pipe lining material is cured to line the inner wall of the conduit.

A photo-curing resin or a thermosetting resin is used for the curable resin with which the tubular resin-absorbent material is impregnated. When a photo-curing resin is used, the resin is cured by maneuvering an irradiation device (a UV lamp, a visible-light source, or another light irradiation source) into the pipe lining material which is kept pressed against the inner wall of the conduit and held in a circular shape. In a case in which a thermosetting resin is used, hot water, hot air, or another heat medium is applied to the pipe lining material to cure the resin.

In the case of a pipe lining material in which a photo-curing resin is used, rapid curing can be accomplished, and little time is necessary for the resin to cure. However, a problem is presented in that the layer that is able to be cured is less thick; i.e., it is typically approximately 10 mm. In contrast, in the case of a pipe lining material in which a thermosetting resin is used, the resin can be cured even if the pipe lining material is made thicker; however, the curing rate is slow, and a long time is required for the resin to cure.

Accordingly, it has been proposed that a tubular resin-absorbent material be impregnated by both a photo-curing resin and a thermosetting resin, so that curing can be accomplished in a relatively short time, even if the pipe lining material is thick (see Japanese Laid-open Patent Application Publication No. 2003-33970). After having been inserted in the conduit, the photo-curing resin of such a pipe lining material will be on the interior side. First the inside resin is cured by being exposed to light, and the other resin is cured by the heat generated when the interior-side resin is cured.

In the pipe lining material disclosed in Japanese Laid-open Patent Application Publication No. 2003-33970, the heat generated as a result of the curing of the photo-curing resin is of high temperature, so that the other resin can cure rapidly by generated heat. However, the rapid curing leads to problems in that voids (gaps) form in the cured pipe lining material, water-tightness deteriorates, and water may seep in from the ground even after the pipeline has been lined. A problem is also presented in that, after having cured, the finished lining is of poor quality.

It is therefore an object of the present invention to provide a high-quality pipe lining material having improved water-tightness, and a method for manufacturing this pipe lining material.

According to the present invention, a pipe lining material for insertion into a pipe to rehabilitate an inner peripheral surface thereof comprises an outer lining material made of a tubular resin-absorbent material impregnated with a curable liquid resin, and an inner lining material which comes into close contact with an inner peripheral surface of the outer lining material and which is made of a tubular resin-absorbent material impregnated with a curable liquid resin. The resin-absorbent material of the inner lining material has a higher density than that of the outer lining material.

The present invention provides a method for manufacturing a pipe lining material that is inserted into a pipe to rehabilitate an inner peripheral surface thereof. Prepared in the method are an outer lining material made of a tubular resin-absorbent material that is impregnated with a curable liquid resin, and an inner lining material made of a tubular resin-absorbent material that is impregnated with a curable liquid resin. The resin-absorbent material of the inner lining material has a higher density than the resin-absorbent material of the outer lining material. The inner lining material is inserted into the outer lining material so as to be in close contact therewith to manufacture a pipe lining material having the outer lining material and the inner lining material.

In the present invention, an inner lining material that is made of a tubular resin-absorbent material impregnated with a curable liquid resin is disposed as a layer inside an outer lining material made of a tubular resin-absorbent material impregnated with a curable liquid resin. The resin-absorbent material of the inner lining material has a higher density than the resin-absorbent material of the outer lining material. Since the density of the resin-absorbent material of the inner lining material is higher than the density of the resin-absorbent material of the outer lining material, voids are less readily formed, and the surface becomes smooth and airtight. Accordingly, even if voids are generated in the resin-absorbent material of the outer lining material, they will be covered by the inner lining material that has fewer voids. This ensures that the pipe lining material will have better water-tightness and will be properly finished. Therefore, a high-quality pipe lining material is obtained.

Under the condition that the density of the resin-absorbent material of the inner lining material is higher than that of the resin-absorbent material of the outer lining material, the same effect will be obtained for cases where the resin-absorbent materials of the inner and outer lining materials are both impregnated with a photo-cursing resin and a thermosetting resin; where the resin-absorbent materials of the inner and outer lining materials are impregnated with only a photo-curing resin or with only a thermosetting resin, or where one of the resin-absorbent materials is impregnated with a photo-curing resin or a thermosetting resin and the other resin-absorbent material is impregnated with both a photo-curing resin and a thermosetting resin.

Further features of the invention, its nature and various advantages will be more apparent from the accompanying drawings in which:
FIG. 1 is a perspective view of a pipe lining material;
FIG. 2 is a separated view of the pipe lining material;
FIG. 3 is a cross-sectional view of a vertical cross-section of the pipe lining material;
FIG. 4 is a view illustrating a method for manufacturing an inner lining material;
FIGS. 5a - 5e are illustrative views showing steps for fabricating a two layer pipe lining material; and
FIG. 6 is a view showing a conduit being rehabilitated using a pipe lining material.

The best modes for carrying out the present invention will be described hereinafter with reference to the accompanying drawings. A sewer main pipe is shown as a pipe to be rehabilitated. However, the present invention can also be applied to cases in which pipes used in a water supply system, agricultural irrigation system, and the like will be lined.

The invention will be described with reference with embodiments in which both the resin-absorbent material of an inner lining material and the resin-absorbent material of an outer lining material are impregnated with both a resin that cures by light (referred to hereinafter as "first resin"), and a thermosetting resin or an ambient-temperature-curing resin that cures by heat (referred to hereinafter as "second resin"); however, the present invention is not limited to this embodiment, and can also be applied to cases in which the resin-absorbent materials of the inner lining material and the outer lining material are impregnated only with the first resin, or cases in which the resin-absorbent materials of the inner lining material and the outer lining material are impregnated only with the second resin. Similarly, the present invention can also be applied to a case in which the resin-absorbent material of either the inner or outer lining material is impregnated with the first or second resin, and the resin-absorbent material of the other lining material is impregnated with both the first and second resins.

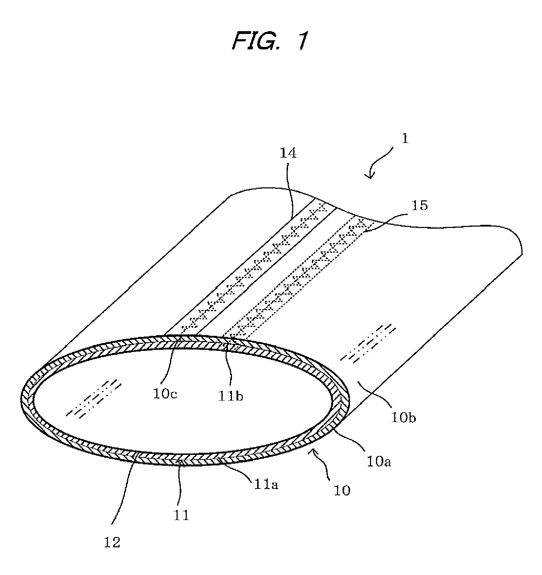

FIGS. 1 to 3 show one embodiment of a pipe lining material according to the present invention. The pipe lining material 1 has a two-layer structure comprising an outer lining material (outer liner) 10 and an inner lining material (inner liner) 11.

The outer lining material 10 is made of a nonwoven, flexible, tubular resin-absorbent material 10a, an outer peripheral surface thereof being coated with an airtight plastic film 10b. The resin-absorbent material 10a is impregnated with the first resin and the second resin, which are in the state of an uncured liquid. The nonwoven resin-absorbent material 10a is made of fibers of plastics such as polyester, polypropylene, nylon, acrylic, vinylon, or the like; glass fibers; and the like. The liquid-form second resin with which the resin-absorbent material 10a is impregnated is an unsaturated polyester resin, epoxy resin, vinyl ester resin, or the like to which a thermal catalyst has been added. The liquid-form first resin with which the resin-absorbent material 10a is impregnated is the same resin as the second resin, but a photocatalyst is added in place of a thermal catalyst. The first resin and the second resin are thus the same except the catalyst added, and are both thermosetting resins; however, the second resin having a thermal catalyst added thereto may be called a thermosetting resin, and the first resin having a photocatalyst added thereto a photo-curing resin.

Polyethylene, polyethylene/nylon copolymer, vinyl chloride, polypropylene, or the like is used for the airtight plastic film 10b.

The resin-absorbent material 10a of the outer lining material 10 is impregnated with the first and second resins that are in a mixed state. However, as described in Japanese Laid-open Patent Application Publication No. 2003-33970, the resins can also be impregnated in a distributed fashion, with the inner peripheral surface being impregnated with the first resin and the outer peripheral surface being impregnated with the second resin. Two-layer impregnation is also possible, a layer of the first resin being formed on the inner peripheral surface and a layer of the second resin being formed on the outer peripheral surface.

In the present invention, the terms "inner peripheral surface" and "outer peripheral surface" express the relationship between the inside and the outside of a pipe lining material that has been inserted into an existing pipe and prepared for exposure to light. Accordingly, in a case in which the lining material is to be inserted into an existing pipe using eversion, the lining material, before being inserted, will be in a state in which the first resin is distributed or present in the outer peripheral surface thereof, and the second resin is distributed or present in the inner peripheral surface thereof.

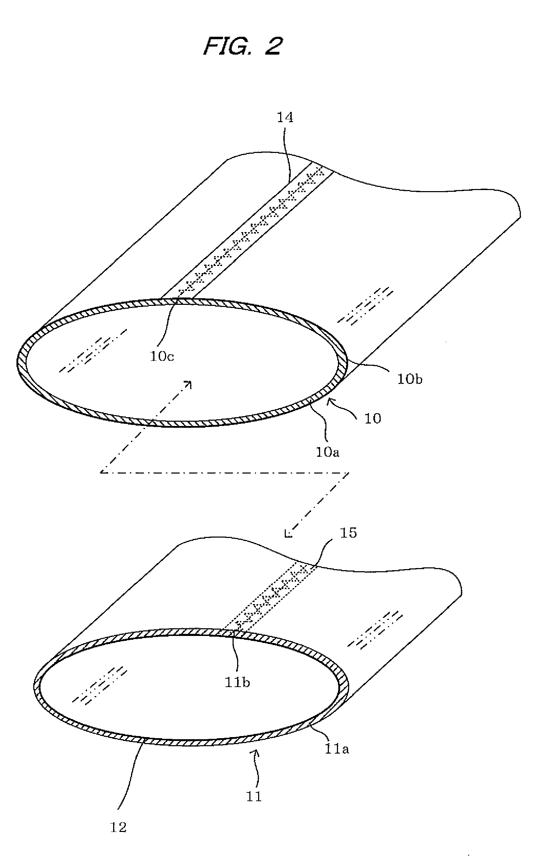

The resin-absorbent material 10a of the outer lining material 10 is a material of prescribed width and length, which has been coated on one side with a high-airtightness plastic film 10b. The flat resin-absorbent material is formed into a cylindrical shape, the two ends thereof are aligned and stitched together, and the resin-absorbent material 10a is formed in a tubular shape as shown in the upper part of FIG. 2. A polyurethane, polyethylene, or polypropylene tape 14 is affixed to the resin-absorbent material 10a, whereby a region 10c where the two ends of the resin-absorbent material 10a have been aligned is hermetically sealed. Alternatively, it is also possible to coat the material with the airtight plastic film 10b after the flat resin-absorbent material has been formed into a cylindrical shape and the two ends thereof stitched together to produce a tubular shape.

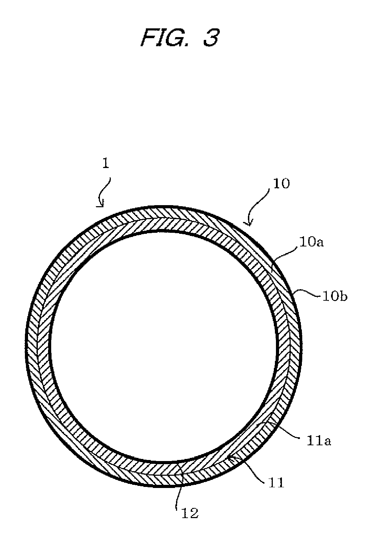

FIG. 3 is a view of a cross-section of the pipe lining material, wherein the joined region 10c of the resin-absorbent material 10a, the tape 14, and other similar features are not shown for simplicity of the drawing. The resin-absorbent material 10a thus formed into a tubular shape is impregnated with the first and second resins through vacuum suction.

The flat resin-absorbent material may also be rolled into a cylinder after being impregnated with the first and second resins, after which the two ends thereof are bonded or stitched together so as to form a tubular shape.

The outer lining material 10 of such construction is inserted into an aged pipe and pressed against an inner wall thereof using compressed air. In this state, the lining material is exposed to light to cure the first resin. The heat generated from the curing of the first resin causes the second resin to cure. When a pipe is lined in this manner, the curing rate is high; therefore, problems are presented in that voids are generated in the cured lining material, and water-tightness will deteriorate. Accordingly, in the present invention, an inner lining material composed of a tubular, flexible, resin-absorbent material is used. The pipe lining material is thus of a two-layer construction comprising outer and inner lining materials.

In the present invention, when a pipe lining material has been inserted into an existing pipe for exposure to light, the material on the inside is regarded as the "inner lining material," and the material on the outside as the "outer lining material."

A flexible, tubular resin-absorbent material 11a of the inner lining material 11 has higher density than the resin-absorbent material 10a of the outer lining material 10. When the resin-absorbent material 10a of the outer lining material 10 is made of needle-punched nonwoven plastic fibers of polyester or the like, a resin-absorbent material having the same qualities as the resin-absorbent material 10a is used and compressed and needle-punched to manufacture the resin-absorbent material 11a having a higher density than the resin-absorbent material 10a. Alternatively, a nonwoven spunbonded plastic fibers is used for the resin-absorbent material 10a, and a heavy, spunbonded, nonwoven having the same quality as the material 10a and a greater weight per unit area is used for the resin-absorbent material 11a. This also makes it possible to manufacture a resin-absorbent material 11a having a higher density than the resin-absorbent material 10a.

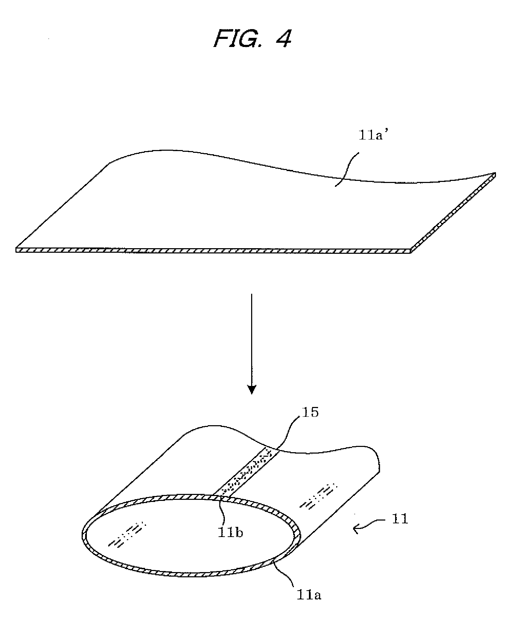

A flat resin-absorbent material 11a' having a prescribed width and length, as shown in the upper part of FIG. 4, is formed into a cylindrical shape, the two ends thereof are aligned and stitched together, and the resin-absorbent material 11a of the inner lining material 11 is formed into a tubular shape as shown in the lower part of FIG. 4. A polyurethane, polyethylene, or polypropylene tape 15 is affixed to the resin-absorbent material 11a to hermetically seal a region 11b where the two ends of the resin-absorbent material 11a have been aligned.

As with the resin-absorbent material 10a of the outer lining material 10, the resin-absorbent material 11a of the inner lining material 11 is impregnated with the first and second resins that are in a mixed state. The characteristics of each of the first and second resins with which the resin-absorbent material 11a is impregnated are the same as those of each of the first and second resins with which the resin-absorbent material 10a is impregnated.

The resin-absorbent materials 10a, 11a are configured in dimension so that an outer diameter of the resin-absorbent material 11a of the inner lining material 11 is substantially the same as an inner diameter of the resin-absorbent material 10a of the outer lining material 10 when the pipe lining material 1 has been inflated so as to be circular in cross-section. This ensures that the outer peripheral surface of the resin-absorbent material 11a of the inner lining material 11 comes into close contact with the inner peripheral surface of the resin-absorbent material 10a of the outer lining material 10, as shown in FIG. 3.

The resin-absorbent material 11a is made to be as thick as, or thinner than, the resin-absorbent material 10a.

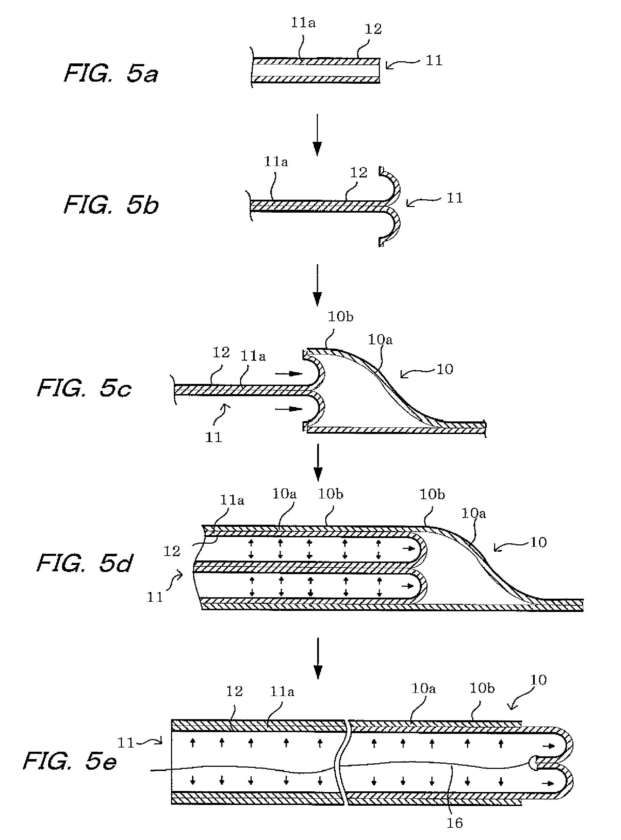

FIG. 5 shows the steps wherein the resin-absorbent material 11a is impregnated with resins, and the inner and outer lining materials 11 and 10 are formed into two layers.

First, as shown in FIG. 5a, the inner lining material 11 is pulled inside a cylindrical inner tube 12, and the resin-absorbent material 11a of the inner lining material 11 is impregnated with the first and second resins. Next, as shown in FIG. 5b, one end of the inner lining material 11 and one end of the inner tube 12 (the ends on the right side in the drawing) are folded back, and the other ends are connected to a rope 16 (FIG. 5e). As shown in FIG. 5c, the folded-back ends of the inner lining material 11 and the inner tube 12 are attached to the left end of the outer lining material 10 that has been impregnated with the first and second resins, and eversion pressure is applied to the inner lining material 11 and the inner tube 12. The application of the eversion pressure causes the inner lining material 11 and the inner tube 12 to be everted and drawn inside the outer lining material 10 (FIG. 5d). As shown in FIG. 5e, when the leading end of the inner lining material 11 juts out a prescribed length from the right end side of the outer lining material 10, the eversion pressure is cancelled out and the insertion of the inner lining material 11 into the outer lining material 10 is complete. This allows the two-layer pipe lining material 1 (FIG. 1) to be fabricated which comprises the outer and inner lining materials 10 and 11. When the compressed air is expelled from the tubular pipe lining material 1 in the state shown in FIG. 5e, it deflates into a flattened tubular shape.

The inner lining material 11 may also be pulled and inserted into the outer lining material 10 instead of being everted as described above.

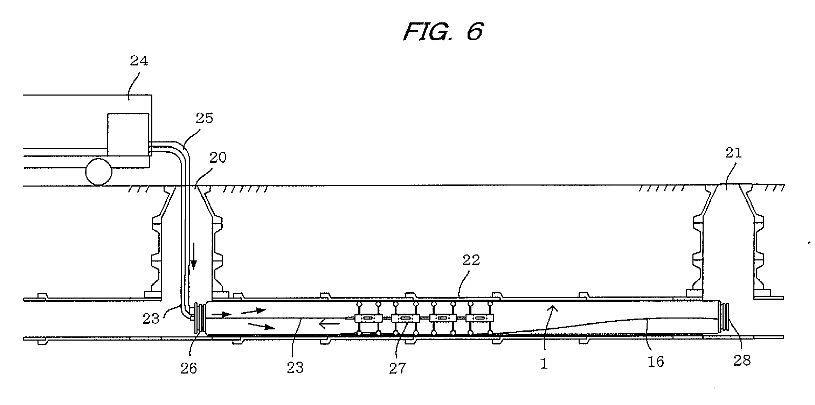

The pipe lining material 1 thus fabricated is inserted into an aged existing pipe to rehabilitate it. FIG. 6 shows the manner in which the pipe is repaired. The pipe lining material 1, in the shape of a flattened tube, is transported to the repairing site using a work vehicle 24 and drawn into a main pipe 22 from a manhole 20 so that one end of the pipe lining material 1 may be led to a manhole 21. An irradiation device 27 for emitting UV and/or visible light is brought in through the end of the pipe lining material 1 at the manhole 21, and end packers 26, 28 are inserted at both ends to hermetically seal the pipe lining material 1. Compressed air is supplied to the interior of the pipe lining material 1 via a line 25 from the work vehicle 24. The pipe lining material 1 then expands to a circular shape, and the airtight plastic film 10b of the outer lining material 10 that forms the outermost periphery of the pipe lining material 1 is brought into close contact with the inner peripheral surface of the main pipe 22. In this state, a rope 23 is pulled to convey the irradiation device 27 from the end at the manhole 21 toward the manhole 20.

The irradiation device 27 emits light inside the pipe lining material 1 to photo-cure the first resins of the lining materials 11 and 10. The heat generated by photo-curing the first resins cures the second resins of the inner and outer lining materials 11 and 10. The resin-absorbent material of the inner lining material 11 has a higher density than the resin-absorbent material of the outer lining material 10; therefore, the first and second resins will be present in a high impregnation density in the inner lining material 11, the amount of air will decrease in proportion thereto, fewer voids will be generated, and the water-tightness when the first and second resins have cured will dramatically improve. The outer lining material 10 is covered by the inner lining material 11 having few voids and an even finish. This ensures that the pipe lining material 1 will have better water-tightness and a high-quality finish even if voids are generated in the resin-absorbent material of the outer lining material 10.

The water-tightness of the pipe lining material 1 improves the most in a case wherein each of the resin-absorbent materials 10a, 11a is impregnated with both the first and the second resins. However, similar results are obtained in a case in which both the resin-absorbent materials 10a, 11a are impregnated with only the first resin, or only the second resin. Similar results are also obtained in a case in which the resin-absorbent material of one of either the inner or outer lining material is impregnated with the first resin or the second resin, and the other resin-absorbent material is impregnated with both the first and the second resins.

When the curing of the pipe lining material has been complete, the end packers 26, 28 are taken out, the irradiation device 27 is removed from the main pipe, and the rope 16 is pulled so as to remove the detachable inner tube 12 covering the inner peripheral surface of the pipe lining material.

A strong UV-blocking film may also be affixed to the outer peripheral surface of the outer lining material 10 using, e.g., heat-welding. A UV-blocking film of this type will obstruct ultraviolet rays; therefore, it is possible to prevent the first resin with which the outer lining material is impregnated from curing unintentionally due to exposure to exterior light. Also, since the UV-blocking film is strong, it is possible to prevent the outer and inner lining materials from stretching when the pipe lining material is drawn into the pipe. If the UV-blocking film is to be made airtight, the airtight film 10b of the outer lining material can be omitted.

The pipe lining material 1 may be inserted into the main pipe 22 by eversion rather than being pulled into the pipe. In this case, the relationship between the interior and the exterior of the inner lining material and the outer lining material is reversed.

## Claims

1. A pipe lining material (1) for insertion into a pipe (22) to rehabilitate an inner peripheral surface thereof;
the pipe lining material comprising:
an outer lining material (10) made of a tubular resin-absorbent material (10a) impregnated with a curable liquid resin; and
an inner lining material (11) which comes into close contact with an inner peripheral surface of the outer lining material (10) and which is made of a tubular resin-absorbent material (11a) impregnated with a curable liquid resin;
wherein the resin-absorbent material (11a) of the inner lining material (11) has a higher density than that of the outer lining material (10).

2. A pipe lining material according to claim 1, wherein the curable resin is a resin cured by heat or light, or is a resin that cures at ambient temperature.

3. A pipe lining material according to claim 1 or 2, wherein the resin-absorbent material (11a) of the inner lining material (11) is made of a spunbonded nonwoven, or a compressed and needle-punched nonwoven.

4. A pipe lining material according to any of claims 1 to 3, wherein an inner peripheral surface of the inner lining material (11) is detachably covered by an inner tube (12).

5. A pipe lining material according to any of claims 1 to 4, wherein the outer lining material (10) is covered at an outer peripheral surface thereof with a UV-blocking film.

6. A method for manufacturing a pipe lining material (1) that is inserted into a pipe (22) to rehabilitate an inner peripheral surface thereof, comprising:
preparing an outer lining material (10) made of a tubular resin-absorbent material (10a) that is impregnated with a curable liquid resin;
preparing an inner lining material (11) made of a tubular resin-absorbent material (11a) that is impregnated with a curable liquid resin, the resin-absorbent material (11a) of the inner lining material (11) having a higher density than the resin-absorbent material (10a) of the outer lining material (10); and
inserting the inner lining material (11) into the outer lining material (10) so as to be in close contact therewith to manufacture a pipe lining material (1) having the outer lining material (10) and the inner lining material (11).

7. A method for manufacturing a pipe lining material according to claim 6, wherein the curable resin is a resin cured by heat or light, or is a resin that cures at ambient temperature.

8. A method for manufacturing a pipe lining material according to claim 6 or 7, wherein the resin-absorbent material (11a) of the inner lining material (11) is made of a spunbonded nonwoven, or a compressed and needle-punched nonwoven.

9. A method for manufacturing a pipe lining material according to any of claims 6 to 8, wherein an inner peripheral surface of the inner lining material (11) is detachably covered by an inner tube (12).

10. A method for manufacturing a pipe lining material according to any of claims 6 to 9, wherein the outer lining material (10) is covered at an outer peripheral surface thereof with a UV-blocking film.
